# FASCICULE DE BREVET EUROPEEN

(11) **EP 3 638 897 B1**
(45) Date de publication et mention de la délivrance du brevet: **26.05.2021**
(21) Numéro de dépôt: 18773501.4
(22) Date de dépôt: 12.06.2018
(51) Int. Cl.: F02K 9/46, F04D 1/02, F04D 29/68, F04D 29/42, F04D 29/22, F04D 29/18

(54) **TURBOPOMPE COMPRENANT UN INDUCTEUR AMÉLIORÉ**
TURBOPUMPE MIT VERBESSERTEM INDUKTOR
TURBOPUMP COMPRISING AN IMPROVED INDUCER

(30) Priorité: 12.06.2017 FR 1755224
(43) Date de publication de la demande: 22.04.2020
(73) Titulaire: ArianeGroup SAS, 75015 Paris (FR)
(72) Inventeur: MENAGER, Simon, 76000 Rouen (FR); NGUYEN DUC, Jean-Michel, 27700 Vezillon (FR)
(74) Mandataire: Cabinet Beau de Loménie
(86) Numéro de dépôt international: PCT/FR2018/051373
(87) Numéro de publication internationale: WO 2018/229421

(56) Documents cités:
- FR-A1- 2 003 743
- JP-A- 2008 175 075
- US-A- 3 677 659
- US-A- 4 375 938

## Description

### DOMAINE DE L'INVENTION

Le présent exposé concerne les turbopompes pour moteurs d'engins spatiaux, et concerne plus précisément la partie d'une turbopompe comprenant un inducteur.

### ETAT DE LA TECHNIQUE ANTERIEURE

Les turbopompes d'engins spatiaux comprennent communément un inducteur réalisant une montée en pression du flux de fluide en amont d'un rouet.

Cependant, de par sa géométrie, l'inducteur d'une turbopompe génère communément une recirculation de fluide en passant par le jeu, d'une région haute pression vers une région basse pression en amont de l'inducteur. Cette recirculation de fluide est problématique dans la mesure où elle diminue fortement la section effective du conduit menant à l'inducteur, et augmente donc de manière importante la vitesse du fluide dans cette conduite ce qui entraine un phénomène de cavitation au niveau de l'inducteur. Cette recirculation est particulièrement problématique à bas débit, pour lesquels elle peut alors s'étendre sur plusieurs fois la longueur de l'inducteur, et donc venir impacter les éléments en amont de l'inducteur.

Ce phénomène entraine donc des conséquences et risques importants pour un lanceur, notamment l'augmentation du risque d'apparition d'effet d'oscillations mécaniques non amorties, la nécessité de surdimensionner différents éléments et notamment les réservoirs d'ergol, et entraine un risque vis-à-vis de l'intégrité mécanique de la turbopompe. Les documents US 3677659 et US 4375938 présentent des pompes munies de conduits de recirculation selon l'état de la technique.

Le présent exposé vise ainsi à répondre au moins partiellement à ces problématiques.

### PRESENTATION DE L'INVENTION

Le présent exposé concerne une turbopompe d'engin spatial comprenant
un conduit d'admission débouchant dans une cavité d'admission délimitée par une paroi interne,
un rouet,
un conduit d'induction s'étendant depuis la cavité d'admission,
un inducteur monté dans le conduit d'induction, en amont du rouet,
un manchon s'étendant dans la cavité d'admission en amont de l'inducteur, dans le prolongement du conduit d'induction, le manchon et la paroi interne de la cavité d'admission définissant une cavité secondaire s'étendant autour du manchon et en communication fluide avec la cavité d'admission, ledit manchon présentant une pluralité de conduits de recirculation débouchant dans la cavité secondaire d'une part, et dans le conduit d'induction en amont d'un bord d'attaque de l'inducteur d'autre part.

Chacun desdits conduits de recirculation présente une première extrémité débouchant dans le conduit d'induction, et une seconde extrémité débouchant dans la cavité secondaire.

Chacun desdits conduits de recirculation présente une section croissante depuis la première extrémité vers la seconde extrémité.

Chacun desdits conduits de recirculation définit typiquement une circulation de fluide présentant une composante tangentielle d'entrée au niveau de la première extrémité, et une composante tangentielle de sortie strictement inférieure à la composante tangentielle d'entrée au niveau de la seconde extrémité.

Selon un exemple non revendiqué, chacun des conduits de recirculation présente par exemple une première extrémité débouchant dans le conduit d'induction au niveau du bord d'attaque de l'inducteur.

Chacun des conduits de recirculation présente typiquement une première extrémité débouchant dans le conduit d'induction en amont du bord d'attaque de l'inducteur.

Selon un exemple, la cavité secondaire est formée de manière à ce que flux parvenant dans ladite cavité secondaire via les conduits de recirculation soit acheminé vers la cavité d'admission.

Le présent exposé concerne également un engin spatial muni d'une telle turbopompe.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1; représente une vue en coupe d'une portion de turbopompe selon un aspect de l'invention,
- les figures 2, 3 et 4 sont des vues représentant l'inducteur d'une telle turbopompe ainsi qu'un manchon associé,
- les figures 5, et 6A et 6B sont des vues détaillant la structure du manchon.

Sur l'ensemble des figures, les éléments identiques sont repérés par des références numériques communes.

### DESCRIPTION DETAILLEE D'EXEMPLES DE REALISATION

On décrit ci-après une turbopompe d'engin spatial selon un aspect de l'invention.

Comme on le verra par la suite, le présent exposé concerne essentiellement la portion de la turbopompe comprenant un inducteur, ainsi que les conduits associés. La structure générale d'une turbopompe est bien connue, et les autres éléments ne seront donc pas décrits en détail ici.

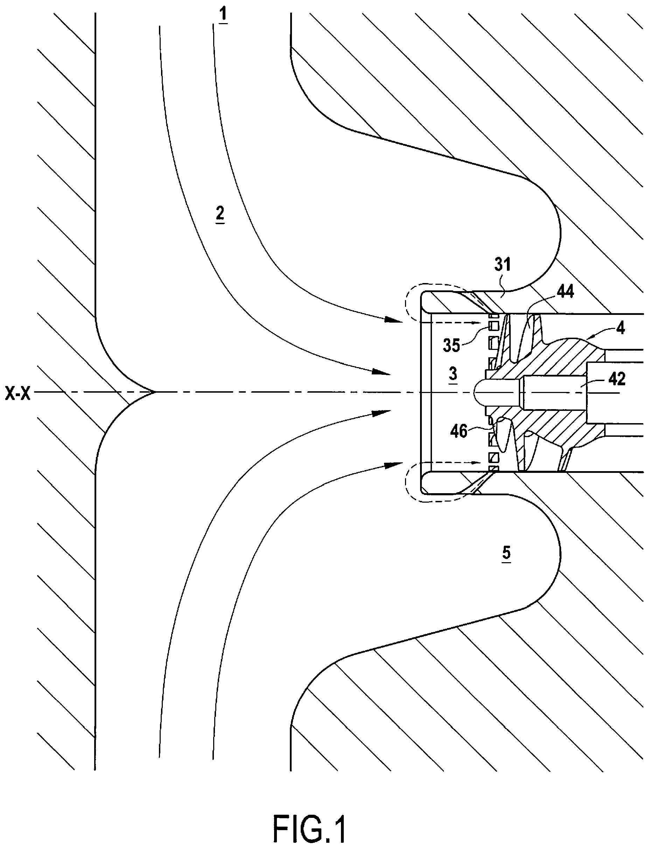

La figure 1 schématise une portion de turbopompe comprenant un conduit d'admission 1 débouchant dans une cavité d'admission 2 centrée sur un axe de rotation X-X, et menant à un conduit d'induction 3 dans lequel est monté un inducteur 4.

Le conduit d'admission 1 est configuré pour être lié à une ligne d'admission en fluide, ce fluide étant ensuite acheminé vers la cavité d'admission, puis vers le conduit d'induction 3 et au travers de l'inducteur 4 avant d'atteindre les étages aval de la turbopompe tels qu'un rouet, ces étages aval n'étant pas représentés sur les figures. L'inducteur 4 est configuré de manière à réaliser une fonction d'aspiration du fluide en vue de le mener aux étages aval de la turbopompe.

L'inducteur 4 tel que représenté est monté sur un moyeu tournant 42, et présente trois motifs hélicoïdaux 44 s'étendant de l'amont vers l'aval de l'inducteur 4. On comprend qu'une telle géométrie de l'inducteur 4 est indiquée à titre d'exemple, mais que l'inducteur 4 n'est pas limité à une telle géométrie. On définit un front amont 46 de l'inducteur 4, correspondant au front amont des motifs hélicoïdaux dans le sens de l'écoulement du fluide.

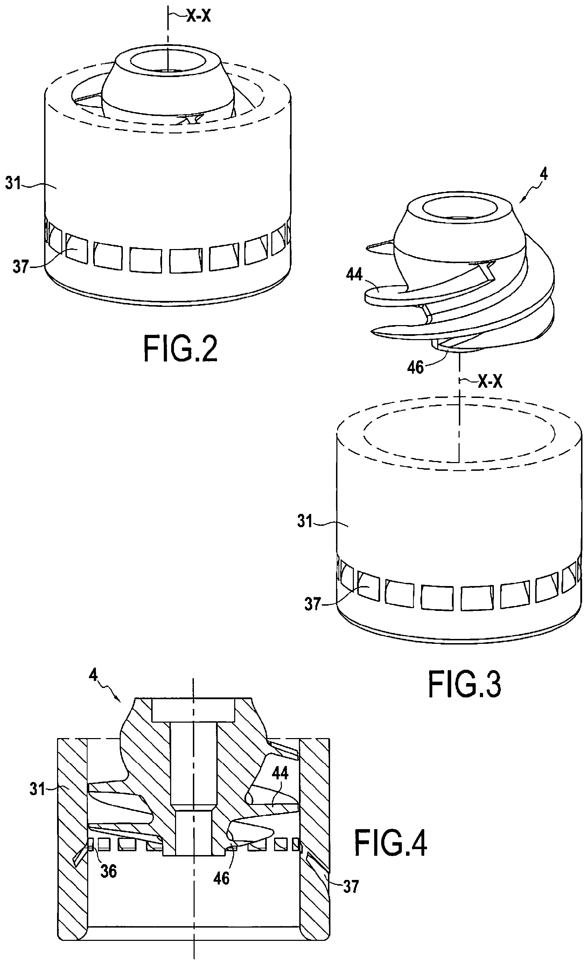

Comme on le voit sur la figure 1, le conduit d'induction 3 définit un manchon 31 entourant l'inducteur 4. Plus précisément, une extrémité du conduit d'induction 3 débouchant dans la cavité d'admission 2 est en saillie dans la cavité d'admission 3, de manière à définir un manchon 31 de forme généralement cylindrique de révolution au sein duquel est disposé l'inducteur 4. Sur les figures 2, 3, 4 et 5, le manchon 31 a été isolé et représenté comme une portion tubulaire à des fins d'illustration.

Cette extrémité du conduit d'induction 3 en saillie dans la cavité d'admission 3 définit une cavité secondaire 5, entourant ladite extrémité du conduit d'induction 3 en saillie dans la cavité d'admission 3. Cette cavité secondaire 5 est en communication fluidique avec la cavité d'admission 2, mais est avantageusement formée de manière à être hors du flux principal de fluide allant de la conduite d'admission 1 à la conduite d'induction 3 (symbolisé par des flèches en traits pleins sur la figure 1) et ainsi former une cavité que l'on qualifie de « morte », c'est-à-dire une cavité dans laquelle l'écoulement est réalisé à basse vitesse par rapport à l'écoulement entre la conduite d'admission 1 et la conduite d'induction 3, de sorte que l'écoulement dans cette cavité secondaire 5 ne perturbe pas l'écoulement au sein de la cavité d'admission 2.

On comprend que la géométrie représentée sur la figure 1 est uniquement donnée à titre d'exemple, et que les effets techniques décrits ci-après peuvent être obtenus pour différentes géométries de cavité secondaire 5, pour laquelle la seule contrainte est qu'elle s'étende au moins partiellement autour du manchon entourant au moins partiellement l'inducteur 4 et qu'elle soit en communication fluidique avec la cavité d'admission 3.

Le manchon 31 présente une pluralité de conduits de recirculation 35 traversant, définissant ainsi un passage entre le conduit d'induction 3 et la cavité secondaire 5. On définit ainsi pour chaque conduit de recirculation une première extrémité 36 débouchant dans le conduit d'induction 3, et une seconde extrémité 37 débouchant dans la cavité secondaire 5.

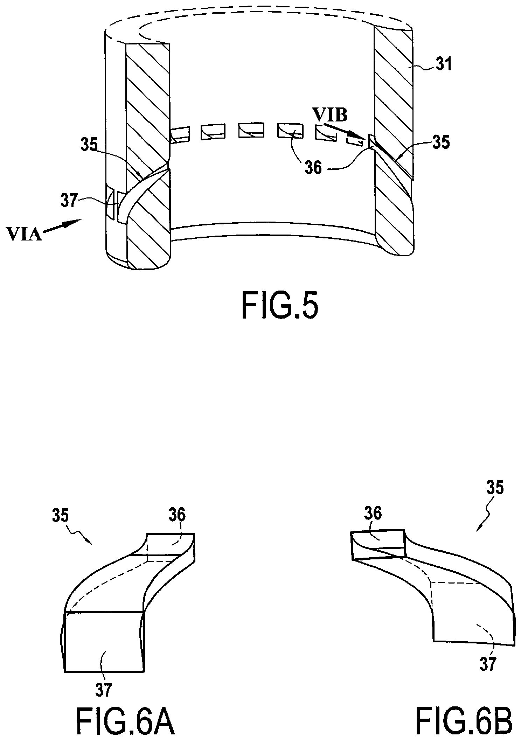

La géométrie des conduits de recirculation 35 est visible notamment sur les figures 5, 6A et 6B, les figures 6A et 6B schématisant le volume interne des conduits de recirculation 35 pris isolément.

Les conduits de recirculation 35 permettent un flux de fluide depuis le conduit d'induction 3 vers la cavité secondaire 5, le flux s'établissant naturellement dans ce sens du fait de la pression relative au sein de la cavité secondaire 5 qui est inférieure à la pression au sein du conduit d'induction 3.

Une telle configuration des conduits de recirculation 35 permet ainsi de ralentir et de redresser l'écoulement de fluide prélevé dans le conduit d'induction 3 avant son injection dans la cavité secondaire 5.

Les premières extrémités des conduits de recirculation 35 sont positionnées en amont du front amont 46 de l'inducteur 4 par rapport au sens de l'écoulement du fluide. Un tel positionnement permet de faire s'échapper une partie du flux de fluide du conduit d'induction 3 vers la cavité secondaire 5, et permet ainsi d'éviter ou à tout du moins de minimiser l'apparition d'un phénomène de reflux de fluide par l'inducteur 4. En effet, le fluide qui pourrait former un reflux est ici évacué du conduit d'induction 3 par les conduits de recirculation 35.

Le flux ainsi évacué du conduit d'induction 3 par les conduits de recirculation 35 est redirigé vers la cavité secondaire 5, de manière à ne pas perturber l'écoulement dans la cavité d'admission 2.

Ce flux passant par les conduits de recirculation 35 pour aller dans la cavité secondaire 5 va ensuite se mêler au flux principal allant du conduit d'admission 1 au conduit d'induction 3. On représente schématiquement cette recirculation de fluide par des flèches en pointillés sur la figure 1. Un tel passage du flux prélevé dans le conduit d'induction 3 par la cavité secondaire 5 permet d'améliorer l'homogénéisation de ce flux que l'on qualifie de secondaire avec le flux principal.

On comprend donc à la lecture de ce qui précède que la structure proposée permet d'éviter la formation d'un reflux en amont de l'inducteur 4 qui viendrait réduire la section effective du conduit d'induction 3. La structure proposée permet en effet d'évacuer une partie du flux vers la cavité secondaire 5 qui est une cavité « morte », de sorte que ce flux sortant du conduit d'induction 3 ne perturbe pas le flux de fluide entrant dans le conduit d'induction 3.

Comme on le voit sur ces figures, les conduits de recirculation 35 présentent selon l'invention une section croissante depuis la première extrémité 36 vers la seconde extrémité 37. Une telle augmentation progressive de la section des conduits de recirculation 35 permet de réduire la vitesse d'écoulement du fluide entre la première extrémité 36 et la seconde extrémité 37.

Les conduits de recirculation 35 présentent de plus typiquement une forme non linéaire. Dans l'exemple représenté sur les figures, les conduits de recirculation 35 sont formés de manière à ce que l'admission du fluide via la première extrémité 36 soit réalisée selon une direction présentant une composante tangentielle et une composante radiale chacune non nulles par rapport à la section interne cylindrique de révolution du manchon 31. Le refoulement de fluide via la seconde extrémité 37 est quant à lui typiquement réalisé selon une direction radiale ou essentiellement radiale, ou à tout le moins selon une direction présentant une composante tangentielle moindre par rapport à la composante tangentielle au niveau de l'admission du fluide via la première extrémité 36. On comprend en effet que le positionnement des premières extrémités 36 des conduits de recirculation 35 en amont ou au niveau du front amont 46 de l'inducteur 4 par rapport au sens de l'écoulement du fluide implique que le flux entrant dans les conduits de recirculation présente une composante tangentielle importante. Or, injecter un tel flux dans la cavité secondaire 5 avec une telle composante tangentielle importante pourrait conduire à une perturbation de l'écoulement de fluide dans la cavité d'admission 2, et réaliser ainsi un redressage du flux de manière à l'injecter dans la cavité secondaire selon une direction essentiellement radiale ou à tout le moins ayant une composante tangentielle réduite permet de limiter les perturbations causées par cette injection de flux dans la cavité secondaire 5.

Les conduits de recirculation sont de plus dimensionnés de manière à réaliser un prélèvement calibré du flux de fluide passant par le conduit d'induction 3, de manière à conserver un débit suffisant passant par l'inducteur 4 pour le fonctionnement des éléments de la turbopompe en aval de l'inducteur 4.

La structure proposée permet donc de réaliser une pluralité de fonctions, notamment une fonction d'aspiration de tout ou partie du flux qui pourrait entrainer un reflux en amont de l'inducteur 4, une fonction de redressement de l'écoulement ainsi prélevé avant son injection dans la cavité secondaire 5, une fonction de réduction de la vitesse de l'écoulement prélevé avant son injection dans la cavité secondaire 5, et une fonction d'homogénéisation du flux prélevé avec le flux principal.

On comprend que la description a ici été réalisée dans le cas d'une turbopompe comprenant un inducteur 4 alimenté par des conduits d'admission 1 radiaux. Le présent exposé peut également être transposé pour un inducteur présentant des conduits d'admission axiaux, les fonctionnalités étant alors inchangées.

## Revendications

1. Turbopompe d'engin spatial comprenant
un conduit d'admission (1) débouchant dans une cavité d'admission (2) délimitée par une paroi interne,
un rouet,
un conduit d'induction (3) s'étendant depuis la cavité d'admission (2),
un inducteur (4) monté dans le conduit d'induction (3), en amont du rouet,
un manchon (31) s'étendant dans la cavité d'admission (2) en amont de l'inducteur (4), dans le prolongement du conduit d'induction (3), le manchon (31) et la paroi interne de la cavité d'admission (2) définissant une cavité secondaire (5) s'étendant autour du manchon (31) et en communication fluide avec la cavité d'admission (2), ledit manchon (31) présentant une pluralité de conduits de recirculation (35) débouchant dans la cavité secondaire (5) d'une part, et dans le conduit d'induction (3) en amont d'un bord d'attaque (46) de l'inducteur (4) d'autre part, chacun desdits conduits de recirculation (35) présentant une première extrémité (36) débouchant dans le conduit d'induction (3), et une seconde extrémité (37) débouchant dans la cavité secondaire (5),
**caractérisée en ce que** chacun desdits conduits de recirculation (35) présente une section croissante depuis la première extrémité (36) vers la seconde extrémité (37).

2. Turbopompe selon la revendication 1, dans laquelle chacun desdits conduits de recirculation (35) définit une circulation de fluide présentant une composante tangentielle d'entrée au niveau de la première extrémité (36), et une composante tangentielle de sortie strictement inférieure à la composante tangentielle d'entrée au niveau de la seconde extrémité (37).

3. Turbopompe selon l'une des revendications 1 ou 2, dans laquelle chacun des conduits de recirculation (35) présente une première extrémité (36) débouchant dans le conduit d'induction (3) en amont du bord d'attaque (46) de l'inducteur (4).

4. Turbopompe selon l'une des revendications 1 à 3, dans laquelle la cavité secondaire (5) est formée de manière à ce que flux parvenant dans ladite cavité secondaire (5) via les conduits de recirculation (35) soit acheminé vers la cavité d'admission (2).

## Patentansprüche

1. Turbopumpe eines Raumfahrzeugs, umfassend
einen Einlasskanal (1), der in einen Einlasshohlraum (2) mündet, der durch eine Innenwand begrenzt ist,
ein Laufrad,
einen Induktionskanal (3), der sich vom Einlasshohlraum (2) erstreckt,
einen Induktor (4), der in dem Induktionskanal (3) stromaufwärts des Laufrads montiert ist,
eine Hülse (31), die sich in den Einlasshohlraum (2) stromaufwärts des Induktors (4) in der Verlängerung des Induktionskanals (3) erstreckt, wobei die Hülse (31) und die Innenwand des Einlasshohlraums (2) einen sekundären Hohlraum (5) definieren, der sich um die Hülse (31) herum erstreckt und in Fluidverbindung mit dem Einlasshohlraum (2) steht, wobei die Hülse (31) eine Mehrzahl von Rückführungskanälen (35) aufweist, die einerseits in den sekundären Hohlraum (5) und andererseits in den Induktionskanal (3) stromaufwärts einer Anströmkante (46) des Induktors (4) münden, wobei jeder der Rückführungskanäle (35) ein erstes Ende (36), das in den Induktionskanal (3) mündet, und ein zweites Ende (37), das in den sekundären Hohlraum (5) mündet, aufweist,
**dadurch gekennzeichnet, dass** jeder der Rückführungskanäle (35) einen vom ersten Ende (36) zum zweiten Ende (37) hin zunehmenden Querschnitt aufweist.

2. Turbopumpe nach Anspruch 1, wobei jeder der Rückführungskanäle (35) eine Fluidströmung definiert, die eine tangentiale Eintrittskomponente am ersten Ende (36) und eine tangentiale Austrittskomponente am zweiten Ende (37) aufweist, die streng niedriger als die tangentiale Eintrittskomponente ist.

3. Turbopumpe nach einem der Ansprüche 1 oder 2, bei der jeder der Rückführungskanäle (35) ein erstes Ende (36) aufweist, das stromaufwärts von der Anströmkante (46) des Induktors (4) in den Induktionskanal (3) mündet.

4. Turbopumpe nach einem der Ansprüche 1 bis 3, wobei der sekundäre Hohlraum (5) so ausgebildet ist, dass die über die Rückführungskanäle (35) in den sekundären Hohlraum (5) eintretende Strömung zum Einlasshohlraum (2) geleitet wird.

## Claims

1. A turbopump for a spacecraft comprising:
an intake duct (1) opening out into an intake cavity (2) delimited by an inner wall,
a spinning wheel,
an induction duct (3) extending from the intake cavity (2),
an inductor (4) mounted in the induction duct (3), upstream of the spinning wheel,
a sleeve (31) extending into the intake cavity (2) upstream of the inductor (4), in the extension of the induction duct (3), the sleeve (31) and the inner wall of the intake cavity (2) defining a secondary cavity (5) extending around the sleeve (31) and in fluid communication with the intake cavity (2), said sleeve (31) having a plurality of recirculation ducts (35) opening out into the secondary cavity (5) on the one hand, and into the induction duct (3) upstream of a leading edge (46) of the inductor (4) on the other hand, each of said recirculation ducts (35) having a first end (36) opening out into the induction duct (3), and a second end (37) opening out into the secondary cavity (5),
**characterized in that** each of said recirculation ducts (35) has a section increasing from the first end (36) to the second end (37).

2. The turbopump according to claim 1, wherein each of said recirculation ducts (35) defines a fluid circulation having a tangential input component at the first end (36), and a tangential output component strictly smaller than the tangential input component at the second end (37).

3. The turbopump according to any of claims 1 or 2, wherein each of the recirculation ducts (35) has a first end (36) opening out into the induction duct (3) upstream of the leading edge (46) of the inductor (4).

4. The turbopump according to any of claims 1 to 3, wherein the secondary cavity (5) is formed such that the flow arriving at said secondary cavity (5) via the recirculation ducts (35) is routed to the intake cavity (2).
